# EUROPEAN PATENT SPECIFICATION

(11) **EP 4 068 433 B1**
(45) Date of publication and mention of the grant of the patent: **24.04.2024**
(21) Application number: 21216846.2
(22) Date of filing: 22.12.2021
(51) Int. Cl.: H01M 4/86, H01M 8/023, H01M 8/0273, H01M 8/1004

(54) **MEMBRANE ELECTRODE ASSEMBLY WITH GAS DIFFUSION LAYER AND MANUFACTURING METHOD FOR MEMBRANE ELECTRODE ASSEMBLY WITH GAS DIFFUSION LAYER**
MEMBRANELEKTRODENANORDNUNG MIT EINER GASDIFFUSIONSSCHICHT UND VERFAHREN ZUR HERSTELLUNG EINER MEMBRANELEKTRODENANORDNUNG MIT EINER GASDIFFUSIONSSCHICHT
ENSEMBLE ÉLECTRODE À MEMBRANE AVEC COUCHE DE DIFFUSION DE GAZ ET PROCÉDÉ DE FABRICATION D'ENSEMBLE ÉLECTRODE À MEMBRANE AVEC COUCHE DE DIFFUSION DE GAZ

(30) Priority: 19.03.2021 JP 2021046438
(43) Date of publication of application: 05.10.2022
(73) Proprietor: SCREEN Holdings Co., Ltd., Kyoto-shi, Kyoto 602-8585 (JP)
(72) Inventor: TAKAGI, Yoshinori, Kyoto-shi, 602-8585 (JP); NISHIWAKI, Yoshikazu, Kyoto-shi, 602-8585 (JP)
(74) Representative: Goddar, Heinz J.

(56) References cited:
- WO-A1-2015/146980
- JP-A- 2017 188 346
- US-A1- 2011 318 667
- US-A1- 2020 280 085

## Description

### Technical Field

The present invention relates to a membrane electrode assembly with gas diffusion layer and a manufacturing method for the membrane electrode assembly with gas diffusion layer.

### Background Art

A fuel cell such as a polymer electrolyte fuel cell generates power and heat simultaneously by electrochemically causing reaction at a gas diffusion layer with a catalyst layer made of a material such as platinum between a fuel gas containing hydrogen and an oxidizing gas containing oxygen such as air.

A cell of a polymer electrolyte fuel cell has a five-layer membrane electrode assembly (5-layer MEA). The 5-layer MEA has a structure containing a 3-layer membrane electrode assembly (3-layer MEA) including an ion-permeable electrolyte membrane, and an anode-side catalyst layer and a cathode-side catalyst layer holding the electrolyte membrane therebetween and resin films (subgaskets) stacked externally to and over and under these electrodes.

The cell further has a 7-layer membrane electrode assembly of a seven-layer structure including gas diffusion layers (GDLs) provided on surfaces of corresponding catalyst layers on the anode side and the cathode side. Separators are arranged externally to these gas diffusion layers. In an actual fuel cell, such cells are stacked of a number responsive to power generation performance to form a fuel cell stack.

According to the disclosure of Patent Literature 1, in order to attach the gas diffusion layer to a surface of the catalyst layer, a frame region of the gas diffusion layer is adhesively bonded through an adhesive to a surface of the subgasket.

### Citation List

### Patent Literature

Patent Literature 1: Japanese Patent Application Laid-Open No. 2010-015963

### Summary of Invention

### Technical Problem

In some cases, the gas diffusion layer to be used includes a microporous layer. The microporous layer functions as a hydrophobic barrier, encourages moistening of the electrolyte membrane, and reduces contact resistance of the gas diffusion layer with the catalyst layer. The microporous layer drains redundant moisture efficiently at high humidity and at high current density to reduce saturation of the cathode catalyst layer with water.

However, adhesively bonding the gas diffusion layer only in the frame region to the subgasket as in the conventional technique results in a small bonding area. This causes a risk that the gas diffusion layer will flap during handling of the membrane electrode assembly. The occurrence of the flapping (vibration) of the gas diffusion layer makes it likely that the microporous layer will be stripped from the gas diffusion layer.

The present invention is intended to provide a technique of reducing the occurrence of stripping of a microporous layer from a gas diffusion layer.

### Solution to Problem

To solve the above-described problem, a first aspect is intended for a membrane electrode assembly with gas diffusion layer comprising: a membrane electrode assembly including an electrolyte membrane, a catalyst layer located on one surface of the electrolyte membrane, and a subgasket bonded to the one surface of the electrolyte membrane at a position on the one surface of the electrolyte membrane external to the catalyst layer; and a gas diffusion layer covering the catalyst layer on one side of the catalyst layer and bonded to the membrane electrode assembly through a bonding part. The gas diffusion layer includes: a gas diffusion layer base material; and a microporous layer adhesively bonded to the gas diffusion layer base material and located between the gas diffusion layer base material and the catalyst layer. Power of adhesion of the microporous layer to the gas diffusion layer base material determined by a test under ISO 29862:2007 is equal to or greater than 0.392 N/25 mm (40 gf/25 mm).

According to a second aspect, in the membrane electrode assembly with gas diffusion layer according to the first aspect, the adhesion power determined by the test under ISO 29862:2007 is equal to or less than 1.96 N/25 mm (200 gf/25 mm).

According to a third aspect, in the membrane electrode assembly with gas diffusion layer according to the first or second aspect, the bonding part is arranged at a position overlapping a periphery part of the gas diffusion layer and extends in a linear pattern along the periphery part.

According to a fourth aspect, in the membrane electrode assembly with gas diffusion layer according to the third aspect, the gas diffusion layer includes two periphery parts facing each other, and the bonding part is arranged at a position overlapping each of the two periphery parts.

According to a fifth aspect, in the membrane electrode assembly with gas diffusion layer according to the fourth aspect, the bonding part has a width of equal to or less than 10 mm.

According to a sixth aspect, in the membrane electrode assembly with gas diffusion layer according to the fourth or fifth aspect, the bonding part has a dry thickness of equal to or less than 5 µm.

According to a seventh aspect, in the membrane electrode assembly with gas diffusion layer according to any one of the fourth to sixth aspects, the bonding part extends discontinuously in a direction parallel to each of the periphery parts of the gas diffusion layer.

According to an eighth aspect, in the membrane electrode assembly with gas diffusion layer according to any one of the third to seventh aspects, the bonding part overlaps an outer periphery of the catalyst layer.

According to a ninth aspect, in the membrane electrode assembly with gas diffusion layer according to the eighth aspect, the bonding part includes: a first bonding part overlapping the subgasket and not overlapping the catalyst layer; and a second bonding part overlapping the catalyst layer, the first bonding part contains ionomer of equal to or greater than 1.0 mg/cm², and the second bonding part contains ionomer of equal to or less than 1.0 mg/cm².

A tenth aspect is intended for a manufacturing method for a membrane electrode assembly with gas diffusion layer comprising the steps of a) preparing a membrane electrode assembly including an electrolyte membrane, a catalyst layer located on one surface of the electrolyte membrane, and a subgasket bonded to the one surface of the electrolyte membrane at a position on the one surface of the electrolyte membrane external to the catalyst layer; b) preparing a gas diffusion layer base material to which a microporous layer is adhesively bonded; and c) bonding the gas diffusion layer base material to the membrane electrode assembly through an adhesive in such a manner as to cover the catalyst layer on one side of the catalyst layer, wherein power of adhesion of the microporous layer to the gas diffusion layer base material determined by a test under ISO 29862:2007 is equal to or greater than 0.392 N/25 mm (40 gf/25 mm).

### Advantageous Effects of Invention

In the membrane electrode assembly with gas diffusion layer according to the first aspect, by setting the power adhesion of the microporous layer to the gas diffusion layer base material to be equal to or greater than 0.392 N/25 mm (40 gf/25 mm), even if the gas diffusion layer vibrates during handling of the membrane electrode assembly with gas diffusion layer, it still becomes possible to reduce the occurrence of stripping of the microporous layer from the gas diffusion layer base material.

The membrane electrode assembly with gas diffusion layer according to the second aspect makes it possible to suppress reduction in cell properties.

In the membrane electrode assembly with gas diffusion layer according to the third aspect, by the provision of the bonding part at the periphery part of the gas diffusion layer, the periphery part of the gas diffusion layer is adhesively bonded to the membrane electrode assembly. This makes it possible to reduce the occurrence of stripping from the membrane electrode assembly with gas diffusion layer, compared to a case where the gas diffusion layer is bonded in an area internal to the periphery part to the membrane electrode assembly. Furthermore, forming the bonding part into the linear pattern allows reduction in the amount of an adhesive used for the bonding part.

The membrane electrode assembly with gas diffusion layer according to the fourth aspect allows the two periphery parts facing each other to be adhesively bonded to the subgasket.

In the membrane electrode assembly with gas diffusion layer according to the fifth aspect, setting the width of the bonding part to be equal to or less than 10 mm makes it possible to reduce the amount of usage of the adhesive. This allows thickness reduction of the membrane electrode assembly with gas diffusion layer.

In the membrane electrode assembly with gas diffusion layer according to the sixth aspect, setting the dry thickness to be equal to or less than 5 µm allows reduction in the amount of usage of the adhesive material, while allowing thickness reduction of the membrane electrode assembly with gas diffusion layer.

In the membrane electrode assembly with gas diffusion layer according to the seventh aspect, providing the bonding part separately allows reduction in the amount of usage of the adhesive.

The membrane electrode assembly with gas diffusion layer according to the eighth aspect allows the gas diffusion layer to be adhesively bonded at the bonding part to the outer periphery of the catalyst layer.

In the membrane electrode assembly with gas diffusion layer according to the ninth aspect, setting the ionomer in the second bonding part overlapping the catalyst layer to be equal to or less than 1.0 mg/cm² makes it possible to ensure both proton conductivity and adhesion properties.

In the manufacturing method for the membrane electrode assembly with gas diffusion layer according to the tenth aspect, by setting the power of adhesion of the microporous layer to the gas diffusion layer base material to be equal to or greater than 40 g/25 mm, even if the gas diffusion layer vibrates during handling of the membrane electrode assembly with gas diffusion layer, it still becomes possible to reduce the occurrence of stripping of the microporous layer from the gas diffusion layer base material.

### Brief Description of Drawings

Fig. 1 includes a side sectional view and a plan view showing a membrane electrode assembly according to a first preferred embodiment;
Fig. 2 includes a side sectional view and a plan view showing an MEA with gas diffusion layer according to the first preferred embodiment;
Fig. 3 includes a side sectional view and a plan view showing an MEA with gas diffusion layer according to a second preferred embodiment;
Fig. 4 includes a side sectional view and a plan view showing an MEA with gas diffusion layer according to a third preferred embodiment; and
Fig. 5 includes a side sectional view and a plan view showing an MEA with gas diffusion layer according to a fourth preferred embodiment.

### Description of Preferred Embodiments

Preferred embodiments of the present invention will be described below by referring to the drawings. Constituting elements in the preferred embodiments are described merely as examples, and the scope of the present invention is not to be limited only to these elements. To facilitate understanding, the size of each part or the number of such parts in the drawings may be illustrated in an exaggerated or simplified manner, if appropriate.

### <1. First preferred embodiment>

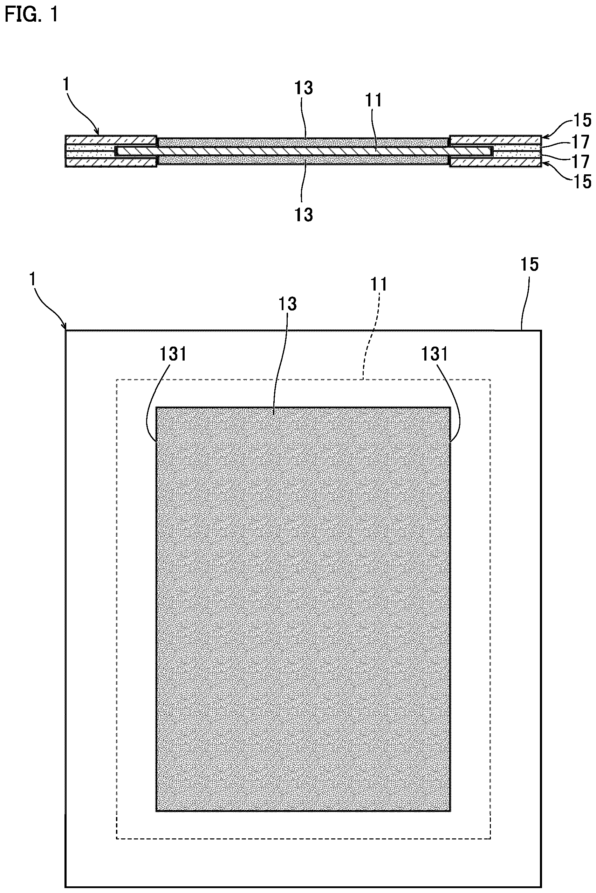

Fig. 1 includes a side sectional view and a plan view showing a membrane electrode assembly 1 according to a first preferred embodiment. In the following, the membrane electrode assembly will be represented as an "MEA." The MEA 1 is used in a fuel cell. As shown in Fig. 1, the MEA 1 has a sheet-like shape with a plurality of stacked film-like members.

The MEA 1 includes an electrolyte membrane 11, two catalyst layers 13, and two subgaskets 15. One of the two catalyst layers 13 is located on a main surface (a surface of the largest area) of the electrolyte membrane 11 on one side, and the other catalyst layer 13 is located on a main surface of the electrolyte membrane 11 on an opposite side. Specifically, the MEA 1 includes the catalyst layer 13, the electrolyte membrane 11, and the catalyst layer 13 arranged in this order as viewed from the one side toward the opposite side. In the following, a direction (stacking direction) in which the two catalyst layers 13 and the electrolyte membrane 11 are arranged will be called a "thickness direction."

For example, a fluorine-based or hydrocarbon-based polyelectrolyte membrane is used as the electrolyte membrane 11. Specific examples of the electrolyte membrane 11 include polyelectrolyte membranes containing perfluorocarbon sulfonic acid (for example, Nafion (registered trademark) available from DuPont US, Flemion (registered trademark) available from AGC Inc., Aciplex (registered trademark) available from AGC Inc., and Goreselect (registered trademark) available from W. L. Gore & Associates). The electrolyte membrane 11 has a thickness from 5 to 30 µm, for example. While the electrolyte membrane 11 swells with moisture in the atmosphere, it contracts with humidity reduction. Namely, the electrolyte membrane 11 has a property of being deformed easily in response to a humidity in the atmosphere.

The two catalyst layers 13 function as a cathode electrode and an anode electrode in a polymer fuel cell. A material to cause fuel cell reaction at the anode or the cathode of the polymer fuel cell is used as a material of the catalyst layers 13. Catalyst particles of platinum (Pt), a platinum alloy, or a platinum compound are used as a material of the catalyst layers 13. For example, the platinum alloy may be an alloy of at least one type of metals selected from a group constituting of ruthenium (Ru), palladium (Pd), nickel (Ni), molybdenum (Mo), iridium (Ir), and Iron (Fe), and platinum. Generally, platinum is used as a material of the catalyst layer 13 for the cathode, and a platinum alloy is used as a material of the catalyst layer 13 for the anode.

The subgaskets 15 function to prevent leakage of supplied gas and generated water, and are intended to facilitate handling of the MEA 1. The subgaskets 15 are films made of polyethylene terephthalate (PET), polyethylene naphthalate (PEN), polyphenylene sulfide (PPS), or polystyrene (PS). Each of the subgaskets 15 may have a thickness (25 to 100 µm, for example) greater than that of the catalyst layers 13.

The subgaskets 15 are each bonded through a bonding layer 17 to an area of the main surface of the electrolyte membrane 11 external to the catalyst layer 13. The subgasket 15 has a frame-like shape with an opening (through hole). The opening of the subgasket 15 has substantially the same size as the catalyst layer 13 and has a shape responsive to the outer shape of the catalyst layer 13. The opening of the subgasket 15 may be smaller than the catalyst layer 13. In this case, an inner periphery of the subgasket 15 may overlap an outer periphery 131 of the catalyst layer 13 in the thickness direction.

Respective outer peripheries of the two subgaskets 15 are located external to an outer periphery of the electrolyte membrane 11. Specifically, the two subgaskets 15 each have a protrusion protruding externally from the outer periphery of the electrolyte membrane 11. The protrusions of the two subgaskets 15 protruding from the electrolyte membrane 11 are adhesively bonded to each other through the bonding layer 17.

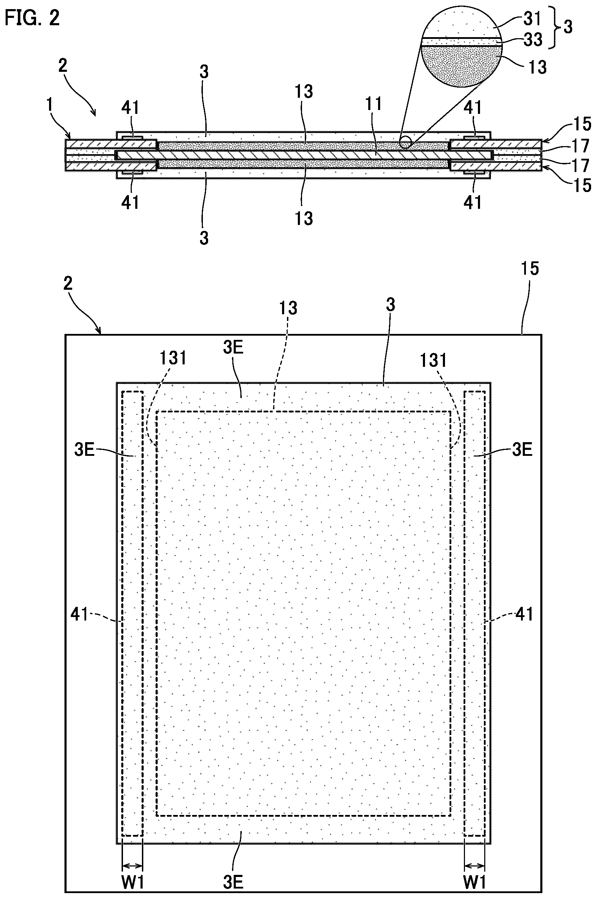

Fig. 2 includes a side sectional view and a plan view showing an MEA 2 with gas diffusion layer according to the first preferred embodiment. The MEA 2 with gas diffusion layer includes the MEA 1 shown in Fig. 1, and two gas diffusion layers 3. One of the two gas diffusion layers 3 is located on one side of the MEA 1, and the other gas diffusion layer 3 is located on an opposite side of the MEA 1. Namely, the MEA 1 is caught between the two gas diffusion layers 3. The following description is intended for a configuration of the MEA 2 with gas diffusion layer closer to the one side than the electrolyte membrane 11. A configuration of the MEA 2 with gas diffusion layer closer to the opposite side than the electrolyte membrane 11 is the same as the configuration on the one side.

The gas diffusion layer 3 has a larger area than the catalyst layer 13 and is provided in such a manner as to cover an outer surface of the catalyst layer 13 entirely. As shown in Fig. 2, the gas diffusion layer 3 has a protrusion protruding externally from the outer periphery 131 of the catalyst layer 13. The protrusion of the gas diffusion layer 3 protruding from the catalyst layer 13 is adhesively bonded to a surface of the subgasket 15 on the one side through two first bonding parts 41. The gas diffusion layer 3 has a rectangular shape, for example. The shape of the gas diffusion layer 3 is not limited to a rectangle but may be a circle (including an oval) or a polygon, for example.

As shown in an enlarged view in Fig. 2, the gas diffusion layer 3 includes a gas diffusion layer base material 31 and a microporous layer 33. In the MEA 2 with gas diffusion layer, the microporous layer 33 is located between the gas diffusion layer base material 31 and the catalyst layer 13.

The gas diffusion layer base material 31 is made of a porous member having conductivity. For example, the gas diffusion layer base material 31 is carbon paper or carbon cloth. The gas diffusion layer base material 31 has functions such as supplying hydrogen or air as fuel to an electrode (catalyst), collecting electrons generated by chemical reaction at the electrode, and moisturizing the electrolyte membrane 11 and discharging purified water.

The microporous layer 33 is adhesively bonded to the gas diffusion layer base material 31. The microporous layer 33 is a coating film formed by applying a paste composition for microporous layer formation onto one surface of the gas diffusion layer base material 31, and then drying the paste composition, for example. The paste composition contains a water-repelling resin made of non-polymer fluorine material (polytetrafluoroethylene (PTEE), for example), and a conductive carbon material such as carbon black, carbon nanotubes, or carbon nanofibers, for example. The paste composition contains an adhesive (such as thermoplastic resin), if necessary.

The microporous layer 33 changes a component ratio of the composition to provide the gas diffusion layer 3 with a function of retaining a larger amount of moisture in the electrolyte membrane 11 or a function of discharging redundant moisture in the MEA 1 efficiently, for example.

The power of adhesion of the microporous layer 33 to the gas diffusion layer base material 31 determined by a test under ISO 29862:2007 (JIS Z 0237:2009) is preferably equal to or greater than 0.392 N/25 mm (40 gf/25 mm), more preferably, equal to or greater than 0.49 N/25 mm (50 gf/25 mm), more preferably, equal to or greater than 0.588 N/25 mm (60 gf/25 mm), still more preferably, equal to or greaterthan 0.637 N/25 mm (65 gf/25 mm). By setting the adhesion power to be equal to or greater 0.392 N/25 mm (40 gf/25 mm), even if the gas diffusion layer 3 vibrates during handling of the MEA 2 with gas diffusion layer, it still becomes possible to reduce the occurrence of stripping of the microporous layer 33 from the gas diffusion layer base material 31.

The power of adhesion of the microporous layer 33 to the gas diffusion layer base material 31 determined by the test under ISO 29862:2007 is preferably equal to or less than 1.96 N/25 mm (200 gf/25 mm), more preferably, equal to or less than 1.862 N/25 mm (190 gf/25 mm), more preferably, equal to or less than 1.764 N/25 mm (180 gf/25 mm), more preferably, equal to or less than 1.666 N/25 mm (170 gf/25 mm), still more preferably, equal to or less than 1.568 N/25 mm (160 gf/25 mm). By setting the adhesion power to be equal to or less than 1.96 N/25 mm (200 gf / 2 5 mm), reduction in gas-permeability of the gas diffusion layer 3 is suppressed, thereby suppressing reduction in cell properties of the MEA 1.

The first bonding parts 41 are arranged at positions overlapping periphery parts 3E of the gas diffusion layer 3 in the thickness direction. The first bonding parts 41 are provided at the periphery parts 3E, 3E forming two of the four sides of the rectangular gas diffusion layer 3 facing each other. The first bonding parts 41 each have a continuous linear pattern (here, a pattern like a straight line) extending parallel to the periphery part 3E of the gas diffusion layer 3. The periphery part 3E of the gas diffusion layer 3 includes a periphery region of the main surface of the gas diffusion layer 3. The periphery region is a region having a width of about several centimeters defined at an inner position from a periphery (periphery edge) of the gas diffusion layer 3. While the first bonding parts 41 are provided only at the periphery parts 3E, 3E forming the two sides of the gas diffusion layer 3 facing each other in the example of Fig. 2, they may further be provided at the other periphery parts 3E, 3E.

The first bonding parts 41 are each located external to the outer periphery 131 of the catalyst layer 13. Specifically, the first bonding part 41 does not overlap the catalyst layer 13 in the thickness direction. The first bonding part 41 extends in a direction parallel to the outer periphery 131 of the catalyst layer 13.

The first bonding part 41 is formed by applying an adhesive, for example. While the adhesive is not particularly limited, the following materials are preferably used. For example, the adhesive is a thermoplastic adhesive, a thermosetting adhesive, an elastomer-based adhesive, or an adhesive prepared by combining some of these adhesives.

The MEA 2 with gas diffusion layer is prepared by the following procedure, for example.
(1) A step of preparing the MEA 1 and a step of preparing the gas diffusion layer 3.
(2) A step of applying an adhesive to a region of a surface of the gas diffusion layer 3 (a surface of the microporous layer 33) or to a region of a surface of the subgasket 15 where the first bonding part 41 is to be formed. The adhesive for forming the first bonding part 41 may be applied to both the gas diffusion layer 3 and the subgasket 15.
(3) A step of stacking the gas diffusion layer 3 to an outer surface of the catalyst layer 13 of the MEA 1 . As a result of this step, the gas diffusion layer 3 and the subgasket 15 are adhesively bonded to each other with the adhesive in the first bonding part 41. By doing so, the gas diffusion layer 3 is bonded to the MEA 1.

Applying the adhesive directly to the gas diffusion layer 3 allows the adhesive to be applied more correctly to the periphery part 3E of the gas diffusion layer 3 than applying the adhesive to the subgasket 15. This allows bonding of the gas diffusion layer 3 to the subgasket 15 at the periphery part 3E of the gas diffusion layer 3, thereby reducing the occurrence of stripping of the gas diffusion layer 3 from the subgasket 15.

Applying the adhesive for the first bonding part 41 in a linear pattern allows the application to be performed more simply than applying the adhesive in a non-linear pattern. This makes it possible to increase a speed of manufacturing the MEA 2 with gas diffusion layer.

The first bonding part 41 has a width W1 that is preferably equal to or less than 10 mm, more preferably, equal to or less than 2 mm. This makes it possible to suppress reduction in performance of the MEA 1 to be caused by adherence of the adhesive in the first bonding part 41 to the catalyst layer 13. The thickness (dry thickness) of the first bonding part 41 is preferably equal to or less than 5 µm, more preferably, equal to or less than 1 µm. Setting the thickness of the first bonding part 41 in this way makes it possible to restrict the thickness of the MEA 2 with gas diffusion layer.

In the MEA 2 with gas diffusion layer according to the first preferred embodiment, the gas diffusion layer 3 is adhesively bonded to the subgasket 15 only at the two linear first bonding parts 41. Except for these parts, the MEA 2 with gas diffusion layer is not adhesively bonded to the MEA 1. Hence, vibration such as an flapping is likely to occur at the gas diffusion layer 3 during handling of the MEA 2 with gas diffusion layer. The occurrence of vibration at the gas diffusion layer 3 causes a risk of stripping of the microporous layer 33 from the gas diffusion layer base material 31. In response to this, the power of adhesion of the microporous layer 33 to the gas diffusion layer base material 31 is set to be equal to or greater than 40 g/25 mm, thereby reducing the occurrence of stripping of the microporous layer 33 from the gas diffusion layer base material 31 during handling of the MEA 2 with gas diffusion layer.

### <2. Second preferred embodiment>

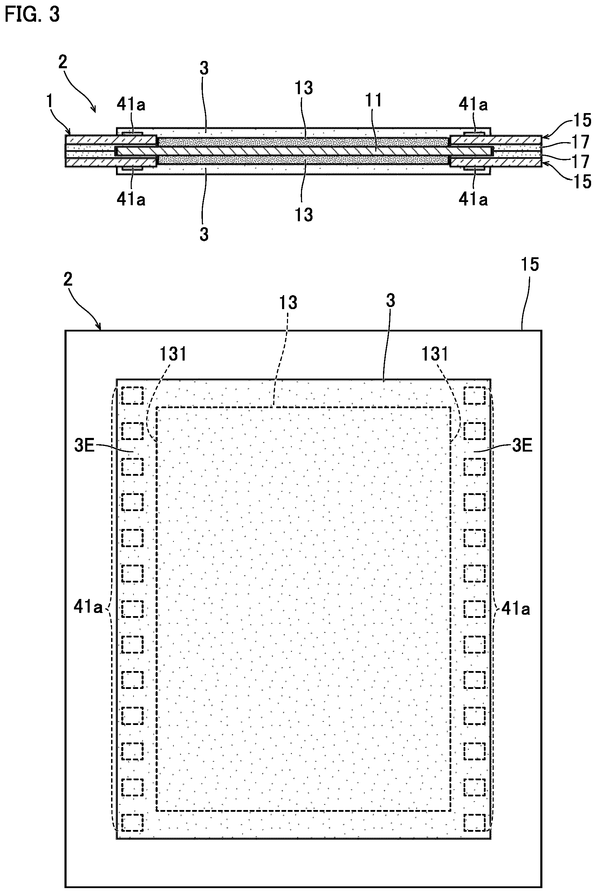

Fig. 3 includes a side sectional view and a plan view showing an MEA 2 with gas diffusion layer according to a second preferred embodiment. The MEA 2 with gas diffusion layer according to the second preferred embodiment includes four first bonding parts 41a instead of the four first bonding parts 41. The first bonding parts 41a each have a linear pattern (a pattern like a straight line) extending discontinuously. The first bonding part 41a is formed by applying an adhesive with a pitch of equal to or less than 30 mm, for example. The first bonding part 41a has a width W1 and a dry thickness that can be the same as the width W1 and the dry thickness of the first bonding part 41 shown in Fig. 2, for example.

Forming the first bonding part 41a into the discontinuous linear pattern allows reduction in the amount of usage of the adhesive. In the case of the first bonding part 41a, the gas diffusion layer 3 is bonded to the subgasket 15 in a smaller area. Hence, an flapping is more likely to occur at the gas diffusion layer 3 during handling of the MEA 2 with gas diffusion layer. In response to this, the power of adhesion of the microporous layer 33 to the gas diffusion layer base material 31 is set to be equal to or greater than 40 g/25 mm, thereby reducing the occurrence of stripping of the microporous layer 33.

While all the four first bonding parts 41 are replaced with the first bonding parts 41a in the second preferred embodiment, only some of the four first bonding parts 41 may be replaced with the first bonding parts 41a.

### <3. Third preferred embodiment>

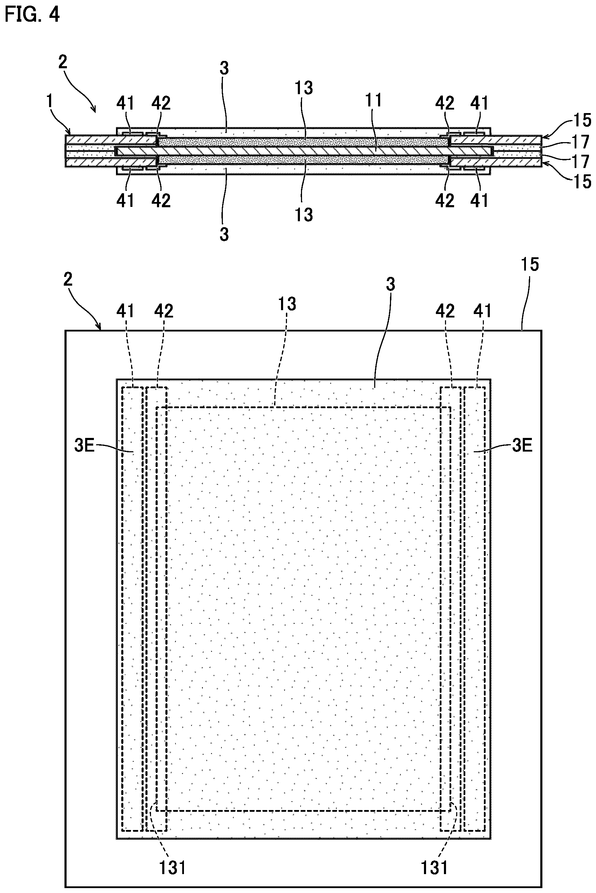

Fig. 4 includes a side sectional view and a plan view showing an MEA 2 with gas diffusion layer according to a third preferred embodiment. The MEA 2 with gas diffusion layer according to the third preferred embodiment further includes four second bonding parts 42. The second bonding parts 42 are regions each formed by applying an adhesive in a linear pattern.

Two of the four second bonding parts 42 are located on one side of the MEA 1, and the other two are located on an opposite side of the MEA 1. The following description is intended for a configuration of the MEA 2 with gas diffusion layer closer to the one side than the electrolyte membrane 11. A configuration of the MEA 2 with gas diffusion layer closer to the opposite side than the electrolyte membrane 11 will not be described as it is the same as the configuration on the one side.

The two second bonding parts 42 are located between the two first bonding parts 41. The second bonding parts 42 are each arranged at a position overlapping the outer periphery 131 of the catalyst layer 13 and overlapping an inner periphery of the subgasket 15 in the thickness direction. The gas diffusion layer 3 is adhesively bonded through the two second bonding parts 42 to the outer periphery 131 of the catalyst layer 13 and to the inner periphery of the subgasket 15.

The first bonding part 41 contains ionomer in a range from 0.05 to 1.5 mg/cm², more preferably, in a range from 1.0 to 1.5 mg/cm². The ionomer is Nafion (registered trademark), for example. The second bonding part 42 has an area overlapping the outer periphery 131 of the catalyst layer 13 in the thickness direction and an area overlapping the inner periphery of the subgasket 15 in the thickness direction. The second bonding part 42 contains ionomer in a range from 0.025 to 1.0 mg/cm², for example. The ionomer is Nafion (registered trademark), for example.

Setting the amounts of the ionomer in the first bonding part 41 and in the second bonding part 42 to the above-described values makes it possible to ensure power of adhesion of the gas diffusion layer 3 to the MEA 1, while making it possible to ensure proton conductivity in the gas diffusion layer 3.

### <4. Fourth preferred embodiment>

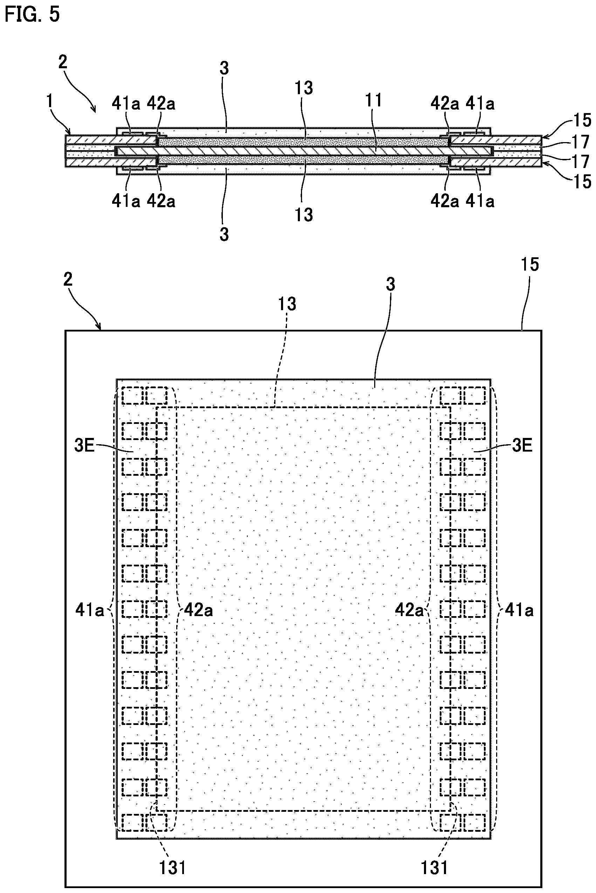

Fig. 5 includes a side sectional view and a plan view showing an MEA 2 with gas diffusion layer according to a fourth preferred embodiment. The MEA 2 with gas diffusion layer according to the fourth preferred embodiment includes a second bonding part 42a instead of the second bonding part 42. The second bonding part 42a has a linear pattern extending discontinuously in a direction parallel to the outer periphery 131. Preferably, the second bonding part 42a is formed by applying an adhesive with a pitch of equal to or less than 30 mm.

Forming the second bonding part 42a into the discontinuous linear pattern allows reduction in the amount of usage of the adhesive. In the case of the second bonding part 42a, the gas diffusion layer 3 is adhesively bonded to the subgasket 15 in a smaller area. Hence, an flapping is likely to occur at the gas diffusion layer 3 during handling of the MEA 2 with gas diffusion layer. In response to this, the microporous layer 33 is adhesively bonded to the gas diffusion layer base material 31 with adhesion power of equal to or greater than 40 g/25 mm, thereby reducing the occurrence of stripping of the microporous layer 33.

While the invention has been shown and described in detail, the foregoing description is in all aspects illustrative and does not limit the invention. It is therefore understood that numerous modifications and variations not shown can be devised without departing from the scope of the claims.

The components described in the foregoing preferred embodiments and in the modifications may be combined together or omitted, as appropriate, without inconsistencies.

### Reference Signs List

- 1: Membrane electrode assembly (MEA)
- 2: MEA with gas diffusion layer
- 3: Gas diffusion layer
- 3E: Periphery part
- 11: Electrolyte membrane
- 13: Catalyst layer
- 15: Subgasket
- 17: Bonding layer
- 31: Gas diffusion layer base material
- 33: Microporous layer
- 41: First bonding part
- 41a: First bonding part
- 42: Second bonding part
- 42a: Second bonding part

## Claims

1. A membrane electrode assembly (2) with gas diffusion layer comprising:
a membrane electrode assembly (1) including an electrolyte membrane (11), a catalyst layer (13) located on one surface of said electrolyte membrane (11), and a subgasket (15) bonded to said
one surface of said electrolyte membrane (11) at a position on said one surface of said electrolyte
membrane (11) external to said catalyst layer (13); and
a gas diffusion layer (3) covering said catalyst layer (13) on one side of said catalyst layer (13) and bonded to said membrane electrode assembly (1) through a bonding part (17), wherein said gas diffusion layer (3) includes:
a gas diffusion layer base material (31); and
a microporous layer (33) adhesively bonded to said gas diffusion layer base material (31) and located between said gas diffusion layer base material (31) and said catalyst layer (13), and power of adhesion of said microporous layer (33) to said gas diffusion layer base material (31) determined by a test under ISO 29862:2007 is equal to or greater than 0.392 N/25 mm (40 gf/25 mm).

2. The membrane electrode assembly (2) with gas diffusion layer according to claim 1, wherein
said adhesion power determined by the test under ISO 29862:2007 is equal to or less than 1.96 N/25 mm (200 gf/25 mm).

3. The membrane electrode assembly (2) with gas diffusion layer according to claim 1 or 2,
wherein
said bonding part (17) is arranged at a position overlapping a periphery part (3E) of said gas diffusion layer (3) and extends in a linear pattern along said periphery part (3E).

4. The membrane electrode assembly (2) with gas diffusion layer according to claim 3, wherein
said gas diffusion layer (3) includes two periphery parts (3E) facing each other, and
said bonding part (17) is arranged at a position overlapping each of said two periphery parts (3E).

5. The membrane electrode assembly (2) with gas diffusion layer according to claim 4, wherein
said bonding part (17) has a width of equal to or less than 10 mm.

6. The membrane electrode assembly (2) with gas diffusion layer according to claim 4 or 5,
wherein
said bonding part (17) has a dry thickness of equal to or less than 5 µm.

7. The membrane electrode assembly (2) with gas diffusion layer according to any one of claims 4 to 6, wherein
said bonding part (41a) extends discontinuously in a direction parallel to each of said periphery parts (3E) of said gas diffusion layer (3).

8. The membrane electrode assembly (2) with gas diffusion layer according to any one of claims 3 to 7, wherein
said bonding part (42) overlaps an outer periphery (131) of said catalyst layer (13).

9. The membrane electrode assembly (2) with gas diffusion layer according to claim 8, wherein
said bonding part (17) includes:
a first bonding part (41) overlapping said subgasket (15) and not overlapping said catalyst layer (13); and
a second bonding part (42) overlapping said catalyst layer (13),
said first bonding part (41) contains ionomer of equal to or greater than 1.0 mg/cm², and
said second bonding part (42) contains ionomer of equal to or less than 1.0 mg/cm².

10. A manufacturing method for a membrane electrode assembly (2) with gas diffusion layer
comprising the steps of:
a) preparing a membrane electrode assembly (1) including an electrolyte membrane (11), a catalyst layer (13) located on one surface of said electrolyte membrane (11), and a subgasket (15)
bonded to said one surface of said electrolyte membrane (11) at a position on said one surface of said
electrolyte membrane (11) external to said catalyst layer (13);
b) preparing a gas diffusion layer base material (31) to which a microporous layer (33) is adhesively bonded; and
c) bonding said gas diffusion layer base material (31) to said membrane electrode assembly (1) through an adhesive in such a manner as to cover said catalyst layer (13) on one side of said catalyst
layer (13), wherein
power of adhesion of said microporous layer (33) to said gas diffusion layer base material (31) determined by a test under ISO 29862:2007 is equal to or greater than 0.392 N/25 mm (40 gf/25 mm).

## Patentansprüche

1. Membranelektrodenanordnung (2) mit Gasdiffusionsschicht, umfassend:
eine Membranelektrodenanordnung (1) mit einer Elektrolytmembran (11), einer Katalysatorschicht (13), die sich auf einer Oberfläche der Elektrolytmembran (11) befindet, und einer Unterdichtung (15), die mit der einen Oberfläche der Elektrolytmembran (11) an einer Position auf der einen Oberfläche der Elektrolytmembran (11) außerhalb der Katalysatorschicht (13) verbunden ist; und
eine Gasdiffusionsschicht (3), die die Katalysatorschicht (13) auf einer Seite der Katalysatorschicht (13) bedeckt und über ein Verbindungsteil (17) mit der Membranelektrodenanordnung (1) verbunden ist, wobei die Gasdiffusionsschicht (3) umfasst:
ein Gasdiffusionsschicht-Basismaterial (31); und
eine mikroporöse Schicht (33), die mit dem Gasdiffusionsschicht-Basismaterial (31) klebend verbunden ist und zwischen dem Gasdiffusionsschicht-Basismaterial (31) und der Katalysatorschicht (13) angeordnet ist, und Haftkraft der mikroporösen Schicht (33) an dem Gasdiffusionsschicht-Basismaterial (31) gleich oder größer ist als 0,392 N/25 mm (40 gf/25 mm), bestimmt durch einen Test gemäß ISO 29862:2007.

2. Membranelektrodenanordnung (2) mit Gasdiffusionsschicht nach Anspruch 1,
wobei die durch den Test nach ISO 29862:2007 bestimmte Haftkraft gleich oder kleiner ist als 1,96 N/25 mm (200 gf/25 mm).

3. Membranelektrodenanordnung (2) mit Gasdiffusionsschicht nach Anspruch 1 oder 2, wobei das Verbindungsteil (17) an einer Position angeordnet ist, die ein Umfangsteil (3E) der Gasdiffusionsschicht (3) überlappt und sich in einem linearen Muster entlang des Umfangsteils (3E) erstreckt.

4. Membranelektrodenanordnung (2) mit Gasdiffusionsschicht nach Anspruch 3, wobei die Gasdiffusionsschicht (3) zwei einander gegenüberliegende Umfangsteile (3E) aufweist und
das Verbindungsteil (17) an einer Position angeordnet ist, die jedes der beiden Umfangsteile (3E) überlappt.

5. Membranelektrodenanordnung (2) mit Gasdiffusionsschicht nach Anspruch 4, wobei das Verbindungsteil (17) eine Breite von gleich oder weniger als 10 mm hat.

6. Membranelektrodenanordnung (2) mit Gasdiffusionsschicht nach Anspruch 4 oder 5, wobei das Verbindungsteil (17) eine Trockendicke von gleich oder weniger als 5 µm aufweist.

7. Membranelektrodenanordnung (2) mit Gasdiffusionsschicht nach einem der Ansprüche 4 bis 6, wobei das Verbindungsteil (41a) sich diskontinuierlich in einer Richtung parallel zu jedem der Umfangsteile (3E) der Gasdiffusionsschicht (3) erstreckt.

8. Membranelektrodenanordnung (2) mit Gasdiffusionsschicht nach einem der Ansprüche 3 bis 7, wobei das Verbindungsteil (42) einen Außenumfang (131) der Katalysatorschicht (13) überlappt.

9. Membranelektrodenanordnung (2) mit Gasdiffusionsschicht nach Anspruch 8, wobei das Verbindungsteil (17) umfasst:
ein erstes Verbindungsteil (41), das die Unterdichtung (15) überlappt und die Katalysatorschicht (13) nicht überlappt; und
ein zweites Verbindungsteil (42), das die Katalysatorschicht (13) überlappt,
das erste Verbindungsteil (41) ein Ionomer von gleich oder mehr als 1,0 mg/cm² enthält, und
das zweite Verbindungsteil (42) ein Ionomer von gleich oder weniger als 1,0 mg/cm² enthält.

10. Herstellungsverfahren für eine Membranelektrodenanordnung (2) mit Gasdiffusionsschicht, umfassend die Schritte:
a) Herstellen einer Membranelektrodenanordnung (1) mit einer Elektrolytmembran (11), einer Katalysatorschicht (13), die auf einer Oberfläche der Elektrolytmembran (11) angeordnet ist, und einer Unterdichtung (15), die mit der einen Oberfläche der Elektrolytmembran (11) an einer Position auf der einen Oberfläche der Elektrolytmembran (11) außerhalb der Katalysatorschicht (13) verbunden ist;
b) Herstellen eines Gasdiffusionsschicht-Basismaterials (31), mit dem eine mikroporöse Schicht (33) klebend verbunden ist; und
c) Verbinden des Gasdiffusionsschicht-Basismaterials (31) mit der Membranelektrodenanordnung (1) durch einen Klebstoff in einer solchen Weise, dass die Katalysatorschicht (13) auf einer Seite der Katalysatorschicht (13) bedeckt wird, wobei die Haftkraft der mikroporösen Schicht (33) an dem Gasdiffusionsschicht-Basismaterial (31) gleich oder größer als 0,392 N/25 mm (40 gf/25 mm) ist, bestimmt durch einen Test gemäß ISO 29862:2007.

## Revendications

1. Ensemble d'électrode à membrane (2) avec couche de diffusion gazeuse comprenant :
un ensemble d'électrode à membrane (1) comprenant une membrane électrolytique (11), une couche de catalyseur (13) située sur une surface de ladite membrane électrolytique (11), et un sous-joint (15) fixé sur ladite une surface de ladite membrane électrolytique (11) dans une position sur ladite une surface de ladite membrane électrolytique (11) externe à ladite couche de catalyseur (13) ; et
une couche de diffusion gazeuse (3) couvrant ladite couche de catalyseur (13) sur un côté de ladite couche de catalyseur (13), et fixée audit ensemble d'électrode à membrane (1) à travers un élément de liaison (17), ladite couche de diffusion gazeuse (3) comprenant :
un matériau de base de la couche de diffusion gazeuse (31) ; et
une couche microporeuse (33) fixée par adhésif audit matériau de base de la couche de diffusion gazeuse (31), et placée entre ledit matériau de base de la couche de diffusion gazeuse (31) et ladite couche de catalyseur (13), et le pouvoir adhésif de ladite couche microporeuse (33) sur ledit matériau de base de la couche de diffusion gazeuse (31), déterminé par un test effectué selon l'ISO 29862:2007, étant égal ou supérieur à 0,392 N/25 mm (40 gf/25 mm).

2. Ensemble d'électrode à membrane (2) avec couche de diffusion gazeuse selon la revendication 1, ledit pouvoir adhésif, déterminé par le test effectué selon l'ISO 29862:2007, étant égal ou inférieur à 1,96 N/25 mm (200 gf/25 mm).

3. Ensemble d'électrode à membrane (2) avec couche de diffusion gazeuse selon la revendication 1ou 2,
ledit élément de liaison (17) étant agencé dans une position chevauchant un élément périphérique (3E) de ladite couche de diffusion gazeuse (3), et s'étendant avec un motif linéaire le long dudit élément périphérique (3E).

4. Ensemble d'électrode à membrane (2) avec couche de diffusion gazeuse selon la revendication 3,
ladite couche de diffusion gazeuse (3) comprenant deux éléments périphériques (3E) placés face à face, et ledit élément de liaison (17) étant agencé dans une position chevauchant chacun desdits deux éléments périphériques (3E).

5. Ensemble d'électrode à membrane (2) avec couche de diffusion gazeuse selon la revendication 4,
la largeur dudit élément de liaison (17) étant égale ou inférieure à 10 mm.

6. Ensemble d'électrode à membrane (2) avec couche de diffusion gazeuse selon la revendication 4 ou 5,
l'épaisseur à sec dudit élément de liaison (17) étant égale ou inférieure à 5 µm.

7. Ensemble d'électrode à membrane (2) avec couche de diffusion gazeuse selon une quelconque des revendications 4 à 6,
ledit élément de liaison (41a) s'étendant de façon discontinue dans une direction parallèle à chacun desdits éléments périphériques (3E) de ladite couche de diffusion gazeuse (3).

8. Ensemble d'électrode à membrane (2) avec couche de diffusion gazeuse selon une quelconque des revendications 3 à 7,
ledit élément de liaison (42) chevauchant un pourtour extérieur (131) de ladite couche de catalyseur (13).

9. Ensemble d'électrode à membrane (2) avec couche de diffusion gazeuse selon la revendication 8,
ledit élément de liaison (17) comprenant :
un premier élément de liaison (41) chevauchant ledit sous-joint (15) et ne chevauchant pas ladite couche de catalyseur (13) ; et
un deuxième élément de liaison (42) chevauchant ladite couche de catalyseur (13),
ledit premier élément de liaison (41) contenant un ionomère égal ou supérieur à 1,0 mg/cm², et ledit deuxième élément de liaison (42) contenant un ionomère égal ou inférieur à 1,0 mg/cm².

10. Procédé de fabrication d'un ensemble d'électrode à membrane (2) avec couche de diffusion gazeuse, comprenant les étapes suivantes :
a) préparation d'un ensemble d'électrode à membrane (1) comprenant une membrane électrolytique (11), une couche de catalyseur (13) située sur ladite une surface de ladite membrane électrolytique (11), et un sous-joint (15) fixé sur ladite une surface de ladite membrane électrolytique (11), dans une position sur ladite une surface de ladite membrane électrolytique (11) externe à ladite couche de catalyseur (13) ;
b) préparation d'un matériau de base de la couche de diffusion gazeuse (31) sur lequel est fixée par adhésif une couche microporeuse (33) ; et
c) fixation dudit matériau de base de la couche de diffusion gazeuse (31) sur ledit ensemble d'électrode à membrane (1) à l'aide d'un adhésif de façon à couvrir ladite couche de catalyseur (13) sur un côté de ladite couche de catalyseur (13),
le pouvoir adhésif de ladite couche microporeuse (33) sur ledit matériau de base de la couche de diffusion gazeuse (31) déterminé par un test effectué selon l'ISO 29862:2007 étant égal ou supérieur à 0,392 N/25 mm (40 gf/25 mm).
